(19) Europäisches Patentamt

European Patent Office

Office européen des brevets

(11) **EP 0 935 742 B1**

(12) **EUROPÄISCHE PATENTSCHRIFT**

(45) Veröffentlichungstag und Bekanntmachung des Hinweises auf die Patenterteilung:
**07.05.2003 Patentblatt 2003/19**

(51) Int Cl.$^7$: **G01K 11/12**, G01N 21/25

(21) Anmeldenummer: **98901920.3**

(86) Internationale Anmeldenummer:
**PCT/CH98/00058**

(22) Anmeldetag: **16.02.1998**

(87) Internationale Veröffentlichungsnummer:
**WO 98/036253 (20.08.1998 Gazette 1998/33)**

(54) **TRANSMITTER-RECEIVER-MODUL FÜR GLASFASERSENSOREN**

TRANSMITTER-RECEIVER MODULE FOR GLASS FIBRE SENSORS

MODULE EMETTEUR-RECEPTEUR POUR CAPTEURS A FIBRES DE VERRE

(84) Benannte Vertragsstaaten:
**CH DE FI FR GB IT LI SE**

(30) Priorität: **17.02.1997 CH 35097**

(43) Veröffentlichungstag der Anmeldung:
**18.08.1999 Patentblatt 1999/33**

(73) Patentinhaber: **Luxcom Engineering**
**6374 Buochs (CH)**

(72) Erfinder:
• **MOREL, Philippe**
**CH-6374 Buochs (CH)**
• **WÄGLI, Peter**
**CH-5620 Bremgarten (CH)**

(74) Vertreter: **Wegmann, Urs**
**Saschela**
**9479 Oberschan (CH)**

(56) Entgegenhaltungen:
EP-A- 0 050 306          EP-A- 0 172 623
EP-A- 0 210 719          WO-A-94/09507
WO-A-96/31762          US-A- 5 131 062

• T. PFEIFER ET AL.: "Fiber-optic reflex sensors for industrial applications" MEASUREMENT., Bd. 12, Nr. 3, Januar 1994, LONDON GB, Seiten 291-304, XP000434505 in der Anmeldung erwähnt
• T. PFEIFER ET AL:: "Construction of a Multisensor Module System Exemplified by an Intelligent Internal Thread Sensor" SENSORS AND ACTUATORS A., Bd. 27A, Nr. 1-3, Mai 1991, LAUSANNE CH, Seiten 621-626, XP000216805 in der Anmeldung erwähnt

**Beschreibung**

Glasfasersensoren kommt heute wegen ihrer vielfältigen Vorteile eine steigende Bedeutung zu. Glasfasersensoren können durch die Einflüsse von elektromagnetischen Feldern nicht gestört werden, sie stellen in explosiven Atmosphären keine Gefahr dar und sie können auch bei erhöhten Temperaturen verwendet werden, bei welchen elektrische z.B. auf Halbleitern basierende Sensoren, wie sie heute weit verbreitet sind, nicht eingesetzt werden können. Der Nachteile solcher Sensoren ist jedoch ihre Querempfindlichkeit bezüglich Variationen in den Bedingungen der Lichtquelle, Übertragungsstrecke und Empfänger

Für die Messung mechanischer Grössen werden z. B. faseroptische Reflexionssensoren beschrieben (T. Pfeifer, E. Eikelmann, Fiber-optic reflex sensors for industrial applications, Measurements 12 (1994) 291-304 und T. Pfeifer, E. Eikelmann, Construction of a Multisensor Module System Exemplified by an Intelligent Inernal Thread Sensor, 8253a Sensors and Actuators - A Physical A27 (1991 May), Nos. 1/3, Lausanne, CH), welche Verfahren aufweisen, die die Querempfindlichkeit dieser Sensoren auf z.B. Lichtquellendrifts, Dämpfungsänderungen der Glasfaserstrecke, und Änderungen der optischen Eigenschaften des zu messenden mechanischen Objektes, auszugleichen vermögen.

Auf Grund ihres grossen potentiellen Einsatzgebietes, sind aber Sensoren von speziellem Interesse, welche Farbänderungen messen. So sind darauf beruhende Sensoren bekannt für: Temperatur, Feuchte, Wasserstoff, pH-Wert, Kohlenwasserstoffe. Die Anwendungen finden sich demzufolge auch in den verschiedensten Gebieten, wie: chemische Detektionstechnik, medizinische Sensoren, Prozessüberwachung, Umwelttechnik etc. Eine Zusammenstellung der heute verwendeten und üblichen Verfahren, findet sich z.B. bei: Gilbert E. Boisde und Alan Harmer, Chemical and Biochemical Sensing With Optical Fibres and Waveguides (Artech House, ISBN: 0-89006-737-6, 1996).

Alle diese Sensoren beruhen darauf, dass das Licht, welches von einer Lichtquelle ausgesendet und über eine Glasfaserleitung zum Sensor transportiert wird, im Sensor spektral verändert und über eine Glasfaserleitung (die gleiche oder eine andere) wieder zurücktransportiert wird und dann durch entsprechende optische Empfänger spektral ausgewertet wird. Als Mechanismen zur spektralen Veränderung des von der Lichtquelle ankommenden Lichts, sind z.B. bekannt: wellenlängenabhängige Absorption, wellenlängenabhängige Reflexion, Anregung von Fluoreszenz, etc.

In der Patentanmeldung WO 94 09507 wird beispielsweise ein Sensor beschrieben, bei welchem, durch eine ausgesendete Wellenlänge, im Sensor ein Fluoreszenzsignal einer anderen Wellenlänge erzeugt wird, dessen Abklingzeit und Intensität von der zu messenden Grösse abhängig ist.

Nachteile solcher Sensoren sind, dass variable Verluste auf der Glasfaserstrecke und Intensitätsschwankungen der Lichtquelle die Messgenauigkeit stark beeinflussen können.

Die Europapatentanmeldung EP 0 050 306 beschreibt ein Verfahren, bei welchem zum Ausgleich der genannten möglichen Störungen, Verfahren verwendet werden, mit denen das gesamte Spektrum des ausgesendeten und/oder empfangenen Lichtes, durch gezielte Variation der Emissionscharakteristik der Lichtquelle und/oder Empfangscharakteristik des Empfängers, gemessen wird. Solche Verfahren sind elektronisch sehr aufwendig, beruhen auf vielen Annahmen bezüglich der Wellenlängenabhängigkeiten der verschiedenen Elemente und berücksichtigen die Wellenlängenabhängigkeit der Glasfaserstrecke zum Sensor nur ungenügend.

Das Patent US 5,131,062 beschreibt einen Sensor, bei welchem interne Referenzdioden und faseroptische Elemente (z.B. Koppler) vorgesehen sind, um Intensitätsschwankungen der Lichtquelle auszugleichen. Solche Elemente bilden interne Referenzempfänger, welche die ausgesendete Leistung messen und die Lichtquellen bezüglich Intensität stabilisieren. Weiter ist in dieser Patentschrift vorgesehen, Licht einer zweiten Wellenlänge, welche vom Sensor nicht verändert wird, über die Glasfaserstrecke zu schicken um Streckenverluste zu messen und auszugleichen.

Solche Systeme wurden auch für die Temperaturmessung beschrieben. In den Patentanmeldungen WO 0 96/31762A, und EP 0 210 719 A werden zum Beispiel faseroptische Temperatursensoren beschrieben, welche darauf beruhen, dass Licht von 2 LED-Lichtquellen unterschiedlicher Wellenlänge zu einem Sensor geschickt wird, welcher die eine Wellenlänge durch ein Filterglas absorbiert, das seine Absorption temperaturabhängig verändert. Die zweite nicht absorbierte Wellenlänge, wird zur Messung der Verluste im Sensor und auf der Glasfaserstrecke verwendet. Die Leistungsfähigkeit dieses Verfahrens ist davon jedoch kritisch von der Intensitäts- und Wellenlängenstabilität der Lichtquellen abhängig. Diese Stabilität kann über die Lebensdauer der Lichtquellen nur schlecht garantiert werden, da diese unterschiedlich altern können.

Um dem genannten Problem zu begegnen, wird in EP 0 172 623 ein Messverfahren beschrieben, welches nur eine Lichtquelle verwendet und die speziellen Eigenschaften von Interferenzsensoren benutzt. Der Nachteil dieses Verfahrens ist jedoch, dass es nur mit einem speziellen Typ von Sensoren funktioniert, welche technologisch aufwendig herzustellen sind.

An diesen Beispielen lässt sich die Problematik solcher Sensorverfahren speziell gut darstellen: Die Genauigkeit der Detektion ist davon abhängig, dass die Wellenlänge der Lichtquellen und die spektralen Eigenschaften optischer Filter und Empfänger über die Zeit und über den Betriebstemperaturbereich des Gerätes konstant bleiben. Es ist nun aber bekannt, dass z. B. LED's ihre Wellenlänge mit der Temperatur verschieben und so zu einer ungenauen oder gar falschen Messung beitragen können. Typischerweise werden deshalb die lichtemittierenden Elemente auf einem thermoelektrischen Kühler montiert, welcher die Temperatur stabilisiert.

Die erreichbare Genauigkeit ist aber kritisch davon abhängig, wie gut die thermische Ankopplung an den thermoeiektrischen Kühler gewährleistet ist. Diese gute thermische Kopplung ist extrem schwierig zu erzielen, wenn die Lichtquellen diskrete mit Gehäuse versehene Bauteile sind.

Auch enthalten solche Sensorsysteme normalerweise weitere Komponenten, welche ihre spektralen Eigenschaften mit den Umgebungsbedingungen wie z.B. Temperatur verändern können: solche Bauteile sind optische Filter, Glasfaserkoppler, Empfänger, Analog/Digital-Wandler und Verstärker. Es ist speziell schwierig die Bedingungen für alle diese Elemente zu kontrollieren, wenn sie als diskrete Elemente und Verdrahtungen angeordnet sind. Des weiteren hat diese Bauform den grossen Nachteil, dass die resultierenden Systeme gross werden und damit schlecht in gebräuchliche industrielle Systeme wie z.B. Speicher-Programmierbare-Steuerungen integriert werden können. Darüber hinaus ist der Aufwand für die erforderlichen Glasfaserverbindungen hoch, da die notwendigen Handgriffe dafür nur schwer oder gar nicht automatisiert werden können.

Die genannten Verfahren sind auch meistens auf die Verwendung nur eines Sensors pro Lichtquelle und Auswerteeinheit ausgelegt und sind spezifisch an einen Sensortyp angepasst, was deren Verwendung weiter einschränkt.

Es ist daher die Aufgabe der Erfindung die genannten Nachteile dadurch zu beheben, dass:

- alle relevanten Bauteile, welche durch Umgebungseinflüsse das Verhalten des Systems negativ beeinflussen können in einem kleinen Modul einer typischen Grösse von 50mm x 50mm x 15mm, welches direkt auf einen thermoelektrischen Kühler montiert werden kann, so untergebracht werden, dass einheitliche Temperaturbedingungen für die Elemente gewährleistet sind. Entsprechende thermoelektrische Kühler sind kommerziell erhältlich.

- das Modul eine einfache optische Schnittstelle aufweist, welche den Aufwand für die Glasfaseranschlüsse minimal hält.

- die Schnittstelle so ausgelegt ist, dass mehrere Sensoren an ein Modul angeschlossen werden können.

- eine elektrische Schnittstelle bereitgestellt wird, welche es erlaubt das Modul direkt auf die gebräuchlichen Busstecker von Speicher-Programmierbaren-Steuerungen aufzustecken.

- das Modul mehrere Empfänger enthält, welche unterschiedliche Bereiche des Spektrum auswerten, so dass allfällige noch verbleibende Drifts von Bauteilen durch entsprechende, sensorabhängige Kompensationsverfahren ausgeglichen werden können.

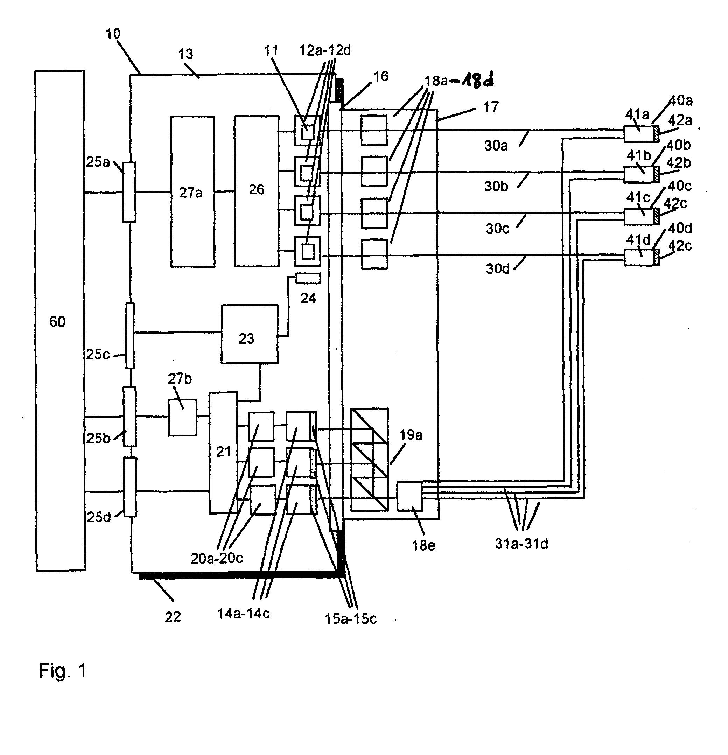

- das Modul durch einfache Bestückungsänderungen der elektronischen und/oder optischen Bauteile an die Verwendung mit unterschiedlichen Sensoren angepasst werden kann. Die Funktionsweise und die bevorzugten Ausführungsformen des Moduls sind in den Fig. 1 bis 5 dargestellt, wobei die einzelnen Figuren Folgendes enthalten:

Fig. 1    Blockschaltbild des Moduls und Beschreibung seiner Funktionsweise an Hand des Beispiels eines Temperatursensors

Fig. 2    Darstellung der Signalverläufe wie sie beim beschriebenen Temperatursensorsystem zustande kommen

Fig. 3    Bevorzugte optische Filtercharakteristiken bei der Verwendung des Moduls für Fluoreszenzsensoren

Fig. 4    Bevorzugte Ausführungsform des Moduls für Sensoren welche einen breiten Spektralbereich auswerten

Fig. 5a    Bevorzugte mechanische Ausführungsform in Frontansicht

Fig. 5b    Bevorzugte mechanische Ausführungsform in Seitenansicht

An Hand der Fig. 1 ist die Funktionsweise des Moduls am Beispiel eines Temperatursensors beschrieben, welcher darauf beruht, dass ein Filterglas eine Absorptionskante aufweist, welche ihre spektrale Lage als Funktion der Wellenlänge verändert. Solche Gläser sind z.B. von der Firma Schott Glaswerke kommerziell erhältlich.

Das Modul 10 beinhaltet beispielsweise 4 Lichtquellen 12a,12b, 12c,12d, in der dargestellten Ausführung LED's, welche in diesem Beispiel alle bei einer typischen Wellenlänge von 880 nm emittieren und welche als sogenannte SMD-Bausteine kommerziell erhältlich sind. Diese LED's sind auf dem Modulträger 13, welcher beispielsweise aus einer SMD-Leiterplatte, oder aus einem Keramikträger besteht, montiert. Dabei sind unterhalb der LED's thermische Via's 11 angebracht (z.B. metallische Kanäle), welche den optimalen thermischen Kontakt zum thermoelektrischen Kühler bewerkstelligen. Durch die SMD-Bauform können die LED's in unmittelbarer Nähe zueinander angebracht werden, so dass die Temperaturunterschiede zwischen ihnen minimal sind.

Als Empfänger 14a, 14b, 14c werden 3 PIN-Dioden eingesetzt welche mit den notwendigen Filtern 15a, 15b, 15c ausgerüstet sind welche die spektrale Auswertung des zurückkommenden Signals vornehmen. Das Modul ist durch ein Deckglas 16 von Umwelteinflüssen wie Feuchte, Staub, etc. geschützt.

Die optische Ankopplung an das Modul erfolgt über den optischen Stecker 17. Dieser Stecker enthält Linsen 18a-d, welche das Licht jeder LED in je eine Glasfaserleitung 30a-d einkoppeln, welche zu den Sensoren 40a-d führen. In diesen Sensoren wird das Licht durch die Filtergläser 41a-d geschickt und von den Spiegeln 42a-d wieder in die rückführenden Glasfaserleitungen 31a-d zurückgeworfen.

Diese rückführenden Glasfaserleitungen werden im optischen Stecker 17 gebündelt, und das Licht wird mit der Linse 18e und dem Aufteilelelement 19a auf die Empfänger 14a-c geschickt. Jeder Empfänger verfügt über einen rauscharmen Transimpedanzverstärker 20a-c, welcher an einen mehrkanaligen A/D-Wandler 21 angeschlossen ist.

Durch die Anordnung des Moduls auf dem thermoelektrischen Kühler 22, kann auch die Temperatur dieser Bauteile stabilisiert werden. Dabei wird der thermoelektrische Kühler in seiner Temperatur vom Regler 23 kontrolliert, welcher ebenfalls auf dem Modul untergebracht ist und welcher über einen Sensor 24 verfügt, der direkt neben den kritischen Bauteilen, den LED's, angeordnet ist.

Die Regelwerte für eine extern zum Modul angeordnete Stromversorgung für den thermoelektrischen Kühler, werden an der Schnittstelle 25c ausgegeben.

Der A/D-Wandler 21 wird über die serielle Schnittstelle 25a gesteuert, über welche der aktive ausgelesene Kanal bestimmt wird. Die LED's werden über die serielle Schnittstelle 25b gesteuert, über welche die aktiven LED's ausgewählt werden. Ueber eine Treiberschaltung 26 kann für jede LED ein individueller Strom eingestellt werden. Im einfachsten Fall sind solche Treiber Widerstands- und Transistorarrays 26b welche durch digitale Signale so gesteuert werden, dass die gewünschten Ströme durch die LED's fliessen. Die angewählten Bedingungen für A/D-Wandler und Lichtquellen, werden in den Speichermodulen 27a und 27b zwischengespeichert.

Durch entsprechende Ansteuerung der LED's können die Sensoren sequentiell hintereinander abgetastet werden, so dass die Temperatur an 4 verschiedenen Stellen mit Hilfe des gleichen Moduls gemessen werden kann. Dazu werden die digitalen Signale der Empfänger 14a-c über die Schnittstelle 25d ausgegeben und im Rechner 60 so zueinander ins Verhältnis gesetzt, dass ein temperaturabhängiger Wert ensteht, welcher mit einer vorkalibrierten Tabelle verglichen und somit der Temperaturwert abgelesen werden kann.

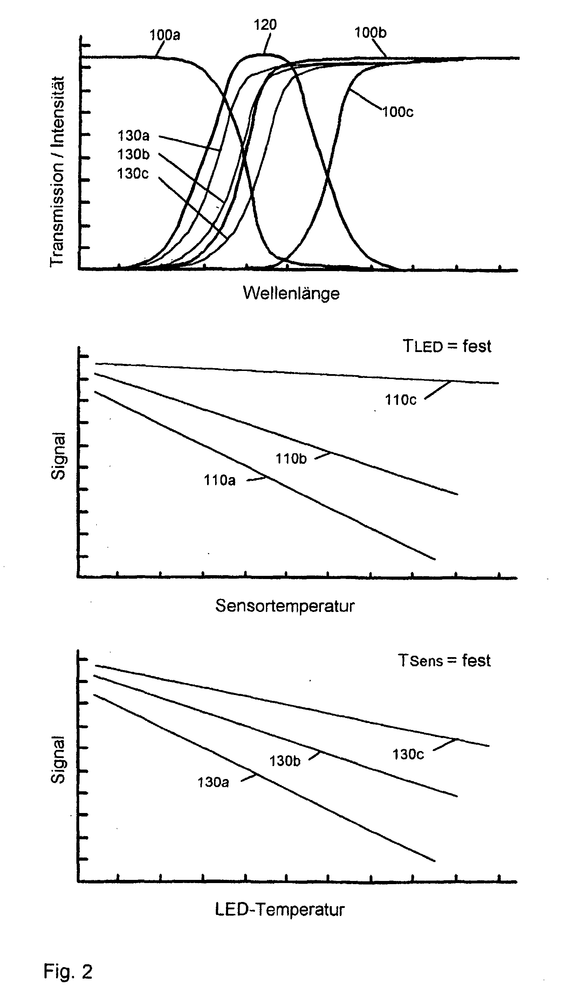

Die Fig. 2 zeigt die für diesen Fall verwendeten Filterelemente, sowie typische Signalverläufe. Die Kurven 100a, 100b, und 100c, zeigen die Transmissionsveriäufe $T(\lambda)$ der Filter 15a, 15b, 15c aus Fig. 1. Die Kurve 120 zeigt den typischen Intensitätsverlauf I(I) der LED's. Die Kurven 110a, 110b, und 110c sowie 130a, 130b, und 130c zeigen typische Signalverläufe S der Empfänger 14a, 14b, 14c aus Fig 1 als Funktion der Sensortemperatur, sowie der LED-Temperatur.

Der Kurvenverlauf $S(T_{LED}, T_{Sens})$ über die Temperatur der LED und des Sensors ($T_{LED}, T_{Sens}$) kann dabei wie folgt berechnet werden (dargestellt beispielhaft für den Empfänger 14a und LED 12a aktiv), wobei $\alpha_{30a/31a}(\lambda)$ den Verluste auf der zugehörigen Glasfaserstrecke beschreibt:

$$S_{14a}(T_{LED}, T_{Sens}) = f(I_{LED12a}(\lambda, T_{LED}) * \alpha_{30a/31a}(\lambda) * T_{15a}(\lambda) * T_{41a}(\lambda, T_{Sens})) \, d\lambda$$

Aus der obigen Formel ist ersichtlich, dass alle Sensorsignale direkt proportional zur Intensität $I_{LED}(\lambda, TLED)$ der LED und zu $\alpha(\lambda)$ den Verlusten auf der Glasfaserstrecke sind. Werden die Signale zueinander ins Verhältnis gesetzt, so können Intensitätsfluktuationen der LED und Veränderungen der Verluste auf der Glasfaserstrecke kompensiert werden.

Wie den Kurven zu entnehmen ist, ergibt sich bei den Kurven 110c und 130c ein stark unterschiedlicher Verfauf, wenn die Temperatur des Sensors bzw. der LED verändert wird. Dieses Verhalten kann nun beigezogen werden, um Temperaturdrifts der Lichtquelle zu kompensieren.

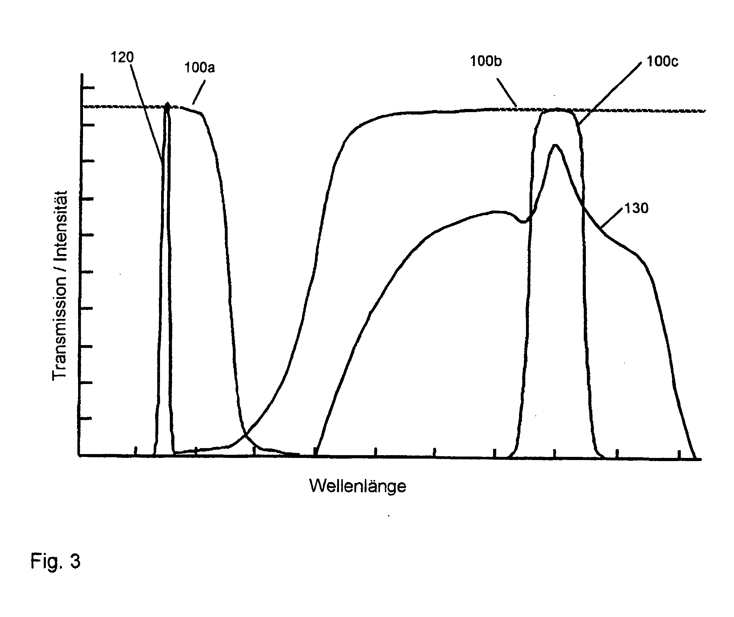

Die Filtercharakteristiken für eine weitere bevorzugte Ausführungsform sind in der Fig. 3 dargestellt. Die Lichtquellen 12a-d, sind in diesem Falle kurzwellenlängige Laserdioden, welche in den Sensoren Fluoreszenz anregen, wobei die Fluoreszenz in ihrer Intensität und Ihrem Abklingverhalten vom zu messenden Parameter abhängig ist.

Die Filter 15a-c sind so ausgebildet, dass die einzelnen Empfänger 14a-c unterschiedliche Bereiche des Spektrum auswerten. Eine Möglichkeit zeigen die Transmissionskurven 100a, 100b, 100c. Dabei wertet der Empfänger 14a die Intensität des Anregungssignals aus (Tiefpass), der Emfänger 14b das Fluoreszenzsignal (Hochpass) und der Empfänger 14c (Bandpass) kann optional verwendet werden, um eine spezifische Charakteristik (z.B. Peak) im Fluoreszenzsignal auszuwerten.

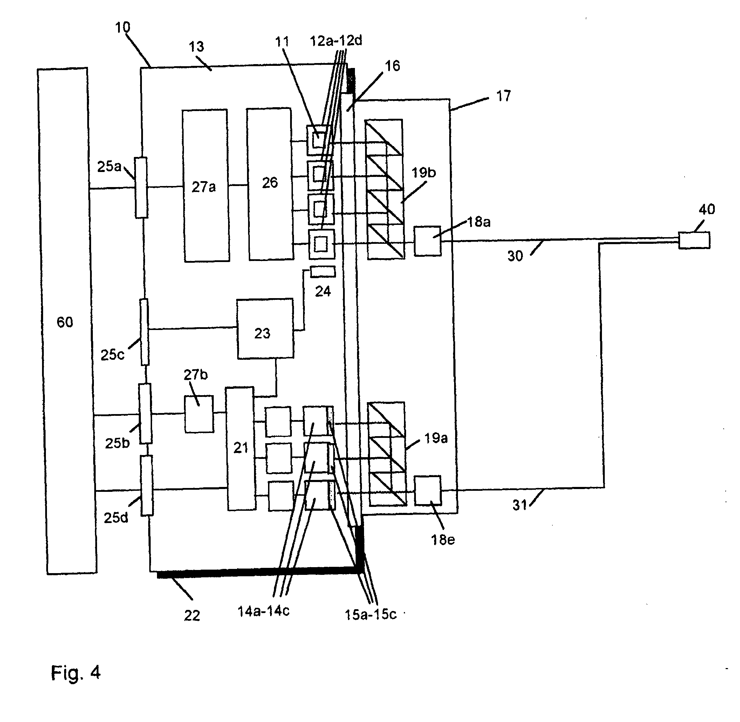

Eine weitere bevorzugte Ausführungsform findet sich in der Fig. 4. Hier wird nur ein Sensor betrieben, wobei die LED's 12a-d auf unterschiedlichen Wellenlängen emittieren und über einen entsprechenden optischen Stecker 17 mit dem optischen Element 19b auf eine Glasfaser 30 gekoppelt werden, so dass dem Sensor 40 ein breiteres optisches Spektrum zur Verfügung steht. Über Schnittstelle 25b kann die Intensität der einzelnen LED's kontrolliert werden. Eine solche Anordnung wird dann verwendet, wenn gössere Spektralbereiche abgetastet werden müssen.

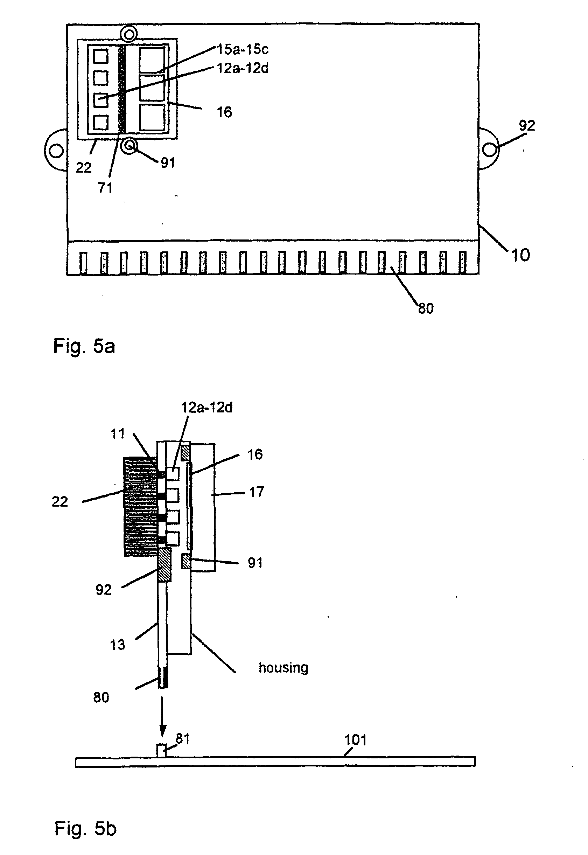

Eine bevorzugte mechanische Ausführungsform ist in der Fig. 5a als Frontansicht und in der Fig. 5b als Seitenansicht schematisch dargestellt. Das Modul 10 ist als Steckmodul ausgebildet wobei die elektrischen Ein/Ausgänge auf einen Stechkontakt 80 geführt sind, welcher z.B. auf einen handelsüblichen Printstecker 81, z.B. eine DIN-Messerleiste. gesteckt werden kann.

Das Modul ist dabei in der dargestellten Ausführungsform rechtwinklig zur Grundplatine 101 (z.B. der Rechnerplatine) angeordnet, so dass auf der einen Seite des Moduls der optische Stecker 17 angeordnet werden kann und auf der anderen Seite der thermoelektrische Kühler 22. Ebenfalls dargestellt sind die Via's 11 unter den Lichtquellen. Das Modul ist mit den Montagemöglichkeiten 91 für den optischen Stecker und einem Montageflansch 92 für das Modul selbst versehen.

Das Deckglas 16 weist zwischen den Lichtquellen 12a-d und den Empfängern 14a-c einen Absorptionsstreifen 71 auf, welcher verhindert, dass Licht im Deckglas direkt von den Lichtquellen zu den Empfängern geleitet werden kann und so das Messsignal stört.

## Patentansprüche

1. Modul zur Ansteuerung von Glasfasersensoren und zum Auswerten derer Signale, wobei die Sensoren darauf beruhen, dass sie eine über Glasfaser eintreffende optische Strahlung spektral verändern und die veränderte Strahlung wieder über Glasfaser zum Modul übertragen, **umfassend:**

   • eine Leiterplatte (13) mit darauf angeordneten Bauteilen, enthaltend mindestens eine Lichtquelle (12) und optische Empfänger (14a,b,c), welche mit Filtern (15a,b,c) ausgerüstet sind, die unterschiedliche Teile des Spektrum zu den Empfängern durchlassen,

   • einen an der Leiterplatte (13) angeordneten thermoelektrischen Kühler (22),

   • einen optischen Stecker (17), welcher die Ankopplung der Lichtquelle (12) und der Empfänger (14a,b,c) an die Glasfasern (30,31) ermöglicht,

   • einen Verstärker (20) und einen A/D-Wandler (21) für die Empfängersignale,

   • mindestens eine elektrische Treiber - Schaltung (26,27a) verbunden mit der Lichtquelle (12) und mindestens eine elektrische Speicher - Schaltung (27b) verbunden mit den A/D-Wandler (21),

   • einen Temperatursensor (24), angeordnet an der Leiterplatte (13) neben der Lichtquelle (12) und mit einem Regler (23) zur Regelung der Temperatur des thermoelektrischen Kühlers (22),

   • digitale elektrische Schnittstellen (25a-d) zur Ansteuerung der Lichtquelle (12), zur Auswahl der A/D-Wandler-Kanäle, zur Übertragung der digitalisierten elektrischen Signale zu einem externen Rechner (60) und zur Ausgabe der Regelwerte des Reglers (23) zur Regelung des thermoelektrischen Kühler (22).

   **dadurch gekennzeichnet, dass** die temperaturkritischen Bauteile, vorzugsweise die mindestens eine Lichtquelle (12) über eine thermische Durchführung (11), durch die Leiterplatte (13) hindurch, mit dem thermoelektrische Kühler (22) thermisch gekoppelt ist und dass mindestens zwei, vorzugsweise drei optische Empfänger (14a,b,c) vorgesehen sind.

2. Modul nach Patentanspruch 1 **dadurch gekennzeichnet, dass** es mehr als eine Lichtquelle (12) aufweist wobei alle Lichtquellen im gleichen Wellenlängenbereich emittieren.

3. Modul nach Patentanspruch 1 **dadurch gekennzeichnet, dass** es mehr als eine Lichtquelle (12) aufweist, wobei die Lichtquellen in unterschiedlichem Wellenlängenbereich emittieren können.

4. Modul nach einem der vorhergehenden Patentansprüche **dadurch gekennzeichnet, dass** der optische Stecker (17) optische Elemente (18a) enthält, welche das Licht jeder Lichtquelle (12) in eine ihr zugeordnete Glasfaser (30) einkoppeln.

5. Modul nach einem der vorhergehenden Patentansprüche **dadurch gekennzeichnet, dass** der optische Stecker (17) ein optisches Element (19b) enthält, welches das Licht aller Lichtquellen (12) auf eine Glasfaser (30) einkoppeln.

6. Modul nach einem der vorhergehenden Patentansprüche, **dadurch gekennzeichnet, dass** es einen optischen Stecker (17) aufweist, welcher mit den optischen Elementen (18e,19a) die optischen Empfangssignale von den Sensoren (40) bündelt und auf die Empfänger (14) aufteilt.

7. Modul nach einem der vorhergehenden Patentansprüche, **dadurch gekennzeichnet, dass** die Filter (15) Hochpass- und Tiefpassfilter sind.

8. Modul nach einem der vorhergehenden Patentansprüche, **dadurch gekennzeichnet, dass** die Filter (15) Hochpass-, Tiefpass- und Bandpassfilter sind.

9. Modul nach einem der vorhergehenden Patentansprüche, **dadurch gekennzeichnet, dass** die Filter (15) Hochpassfilter sind.

10. Modul nach einem der vorhergehenden Patentansprüche, **dadurch gekennzeichnet, dass** die Filter (15) Tiefpassfilter sind.

11. Modul nach einem der vorhergehenden Patentansprüche, **dadurch gekennzeichnet, dass** die Filter (15) Bandpassfilter sind.

12. Modul nach einem der vorhergehenden Patentansprüche, **dadurch gekennzeichnet, dass** die Lichtquellen (12) Halbleiterelemente vorzugsweise vom Typ Leuchtdioden (LED) oder Laserdioden (LD) sind.

13. Modul nach einem der vorhergehenden Patentansprüche, **dadurch gekennzeichnet, dass** die Empfänger (14) Photodioden, vorzugsweise PIN-Dioden sind.

14. Modul nach einem der vorhergehenden Patentansprüche, **dadurch gekennzeichnet, dass** alle Ein/Ausgänge (25a,b,c,d) welche der Steuerung und der Datenübertragung dienen, als digitale Schnittstelle ausgebildet sind, vorzugsweise als 8 Bit-Bus.

15. Modul nach einem der vorhergehenden Patentansprüche, **dadurch gekennzeichnet, dass** die nach aussen führenden elektrischen und optischen Verbindungen über Schnittstellen (17,25) steckbar ausgebildet sind.

16. Modul nach einem der vorhergehenden Patentansprüche, **dadurch gekennzeichnet, dass** es ein optisches Fenster (16) über den Lichtquellen und den Empfängern aufweist, wobei das Fenster vorzugsweise zwischen den Lichtquellen und den Empfängern eine Absorptionsschicht (71) aufweist.

17. Modul nach einem der vorhergehenden Patentansprüche, **dadurch gekennzeichnet, dass** die optischen Elemente (18a,e) im optischen Stecker (17) Linsen (18) sind, vorzugsweise Gradientenindex- und/oder Kugellinsen, und die optischen Elemente (19a,b) vorzugsweise Prismenstrahlteiler sind.

18. Modul nach einem der vorhergehenden Patentansprüche, **dadurch gekennzeichnet, dass** die Bauteile: Filter (15), Lichtquelle (12), Empfänger, A/D - Wandler (21) und Verstärker (20) über eine thermische Durchführung (11), als Via (11) ausgebildet, thermisch an den Kühler (22) gekoppelt ist.

19. Verwendung des Moduls nach einem der vorhergehenden Patentansprüche, für Messaufgaben ausserhalb des Moduls mit angeschlossenen Glasfasersensoren, zur Messung der Feuchtigkeit, des Wasserstoffgehaltes, des pH-Wertes, von Kohlenwasserstoffen und insbesondere der Temperatur.

# EP 0 935 742 B1

**Claims**

1. Module for the control of glass fibre sensors and analysis of their signals, where the sensors are based on the principle that they are capable of spectrally modifying optical rays received via glass fibres and transferring the modified rays via glass fibres to the module, comprising:

   - a circuit board (13) with components arranged thereon, incorporating at least one light source (12) and optical receivers (14a, b, c) fitted with filters (15a, b, c) which allow the passage of different parts of the spectrum to the receivers,
   - a thermo-electric cooler (22) arranged on the circuit board (13),
   - an optical plug (17) which allows the coupling of the light source (12) and the receivers (14a, b, c) with the glass fibres (30, 31),
   - an amplifier (20) and an A/D converter (21) for the receiver signals,
   - at least one electrical driver circuit (26, 27a) connected with the light source (12) and at least one electrical memory circuit (27b) connected with the A/D converter (21),
   - a temperature sensor (24) arranged on the circuit board (13) next to the light source (12) and with a regulator (23) for controlling the temperature of the thermo-electric cooler (22),
   - digital electrical interfaces (25a-d) for controlling the light source (12), selecting the A/D converter channels, transmitting the digitised electrical signals to an external computer (60) and outputting the control values from the regulator (23) to regulate the thermo-electric cooler (22),

   **characterised in that** the temperature-critical components, preferably the at least one light source (12), are thermally coupled via a thermal passage (11) through the circuit board (13) with the thermo-electric cooler (22) and that at least two, and preferably three optical receivers (14a, b, c) are provided.

2. Module according to claim 1, **characterised in that** it has more than one light source (12), where all light sources emit in the same wavelength range.

3. Module according to claim 1, **characterised in that** it has more than one light source (12), where the light sources can emit in different wavelength ranges.

4. Module according to any of the preceding claims, **characterised in that** the optical plug (17) contains optical elements (18a) which couple the light of each light source (12) into an allocated glass fibre (30).

5. Module according to any of the preceding claims, **characterised in that** the optical plug (17) has an optical element (19b) which couples the light of all light sources (12) into one glass fibre (30).

6. Module according to any of the preceding claims, **characterised in that** it has an optical plug (17) which with the optical elements (18e, 19a) bundles the optical reception signals from the sensors (40) and distributes these to the receivers (14).

7. Module according to any of the preceding claims, **characterised in that** the filters (15) are high-pass and low-pass filters.

8. Module according to any of the preceding claims, **characterised in that** the filters (15) are high-pass, low-pass and band-pass filters.

9. Module according to any of the preceding claims, **characterised in that** the filters (15) are high-pass filters.

10. Module according to any of the preceding claims, **characterised in that** the filters (15) are low-pass filters.

11. Module according to any of the preceding claims, **characterised in that** the filters (15) are band-pass filters.

12. Module according to one of the preceding claims, **characterised in that** the light sources (12) are semi-conductor elements, preferably of the light-emitting diode (LED) or laser diode type (LD).

13. Module according to any of the preceding claims, **characterised in that** the receivers (14) are photodiodes, preferably PIN-diodes.

14. Module according to any of the preceding claims, **characterised in that** all inputs/outputs (25a, b, c, d) serving for control and data transmission are formed as digital interfaces, preferably as an 8-bit bus.

15. Module according to any of the preceding claims, **characterised in that** the electrical and optical connections leading towards the outside are formed as plug-in connections via interfaces (17, 25).

16. Module according to any of the preceding claims, **characterised in that** it has an optical window (16) above the light sources and the receivers, where the window preferably has an absorption layer (71) between the light sources and the receivers.

17. Module according to any of the preceding claims, **characterised in that** the optical elements (18a, e) in the optical plug (17) are lenses (18), preferably gradient index and/or ball lenses, and the optical elements (19a, b) are preferably prism ray splitters.

18. Module according to any of the preceding claims, **characterised in that** the components filter (15), light source (12), receiver, A/D converter (21) and amplifier (20) are thermally coupled with the cooler (22) via a thermal connection (11) formed as a via connection (11).

19. Use of the module according to any of the preceding claims for measurement tasks outside the module with connected glass fibre sensors, to measure humidity, hydrogen content, pH value of hydrocarbons, and in particular temperature.

**Revendications**

1. Module pour la commande de capteurs à fibres de verre et pour le traitement des signaux de ceux-ci, le fonctionnement des capteurs reposant sur une modification spectrale d'un rayonnement optique entrant par des fibres de verre et sur une transmission au module du rayonnement modifié, de nouveau par des fibres de verre, comprenant :

   - une carte à circuit imprimé (13) sur laquelle sont disposés des composants comprenant au moins une source de lumière (12) et des récepteurs (14a, b, c) optiques qui sont équipés de filtres (15a, b, c) qui laissent passer vers les récepteurs des parties différentes du spectre,

   - un refroidisseur thermoélectrique (22) disposé sur la carte à circuit imprimé (13),

   - un connecteur (17) optique qui permet le couplage de la source de lumière (12) et des récepteurs (14a, b, c) aux fibres de verre (30, 31),

   - un amplificateur (20) et un convertisseur analogique/numérique (21) pour les signaux des récepteurs,

   - au moins un circuit d'excitation (26, 27a) électrique relié à la source de lumière (12) et au moins un circuit mémoire (27b) électrique relié au convertisseur analogique/numérique (21),

   - un capteur de température (24) disposé sur la carte à circuit imprimé (13) à côté de la source de lumière (12) et pourvu d'un régulateur (23) pour régler la température du refroidisseur thermoélectrique (22),

   - des interfaces (25a-d) électriques numériques pour commander la source de lumière (12), pour sélectionner les canaux du convertisseur anaiogique/numérique, pour transmettre les signaux électriques numérisés à un calculateur (60) externe et pour délivrer les valeurs du régulateur (23) destinées à la régulation du refroidisseur thermoélectrique (22), **caractérisé en ce que** les composants sensibles à la température, de préférence la source de lumière (12), au nombre d'au moins une, est couplée thermiquement au refroidisseur thermoélectrique (22) par un passage (11) thermique qui traverse la carte à circuit imprimé (13) et qu'au moins deux, de préférence trois, récepteurs (14a, b, c) optiques sont prévus.

2. Module selon la revendication 1, **caractérisé en ce qu'**il présente plus d'une source de lumière (12), toutes les sources de lumière émettant dans la même gamme de longueurs d'ondes.

3. Module selon la revendication 1, **caractérisé en ce qu'**il présente plus d'une source de lumière (12), les sources

EP 0 935 742 B1

de lumière pouvant émettre dans des gammes différentes de longueurs d'ondes.

4. Module selon une des revendications précédentes, **caractérisé en ce que** le connecteur (17) optique contient des éléments (18a) optiques qui couplent la lumière de chaque source de lumière (12) dans une fibre de verre (30) associée à cette dernière.

5. Module selon une des revendications précédentes, **caractérisé en ce que** le connecteur (17) optique contient un élément (19b) optique qui couple la lumière de toutes les sources de lumière (12) sur une fibre de verre (30).

6. Module selon une des revendications précédentes, **caractérisé en ce qu'**il présente un connecteur (17) optique qui, avec les éléments (18e, 19a) optiques, focalise les signaux de réception optiques des capteurs (40) et les répartit sur les récepteurs (14).

7. Module selon une des revendications précédentes, **caractérisé en ce que** les filtres (15) sont des filtres passe-haut et des filtres passe-bas.

8. Module selon une des revendications précédentes, **caractérisé en ce que** les filtres (15) sont des filtres passe-haut, des filtres passe-bas et des filtres passe-bande.

9. Module selon une des revendications précédentes, **caractérisé en ce que** les filtres (15) sont des filtres passe-haut.

10. Module selon une des revendications précédentes, **caractérisé en ce que** les filtres (15) sont des filtres passe-bas.

11. Module selon une des revendications précédentes, **caractérisé en ce que** les filtres (15) sont des filtres passe-bande.

12. Module selon une des revendications précédentes, **caractérisé en ce que** les sources de lumière (12) sont des éléments à semi-conducteurs, de préférence du type diodes électroluminescentes ou diodes laser.

13. Module selon une des revendications précédentes, **caractérisé en ce que** les récepteurs (14) sont des photodiodes, de préférence des diodes PIN.

14. Module selon une des revendications précédentes, **caractérisé en ce que** toutes les entrées/sorties (25a, b, c, d) qui servent à la commande et à la transmission de données, sont réalisées sous forme d'interface numérique, de préférence sous forme de bus 8 bits.

15. Module selon une des revendications précédentes, **caractérisé en ce que** les connexions électriques et optiques menant vers l'extérieur sont réalisées avec possibilité d'enfichage par l'intermédiaire d'interfaces (17, 25).

16. Module selon une des revendications précédentes, **caractérisé en ce qu'**il présente une fenêtre (16) optique sur les sources de lumière et les récepteurs, la fenêtre présentant une couche d'absorption (71) de préférence entre les sources de lumière et les récepteurs.

17. Module selon une des revendications précédentes, **caractérisé en ce que** les éléments (18a, e) optiques dans le connecteur (17) optique sont des lentilles (18), de préférence des lentilles à gradient d'indice et/ou des lentilles sphériques, et les éléments (19a, b) optiques sont de préférence des diviseurs de faisceau à prismes.

18. Module selon une des revendications précédentes, caractérisé en ce les composants que sont les filtres (15), la source de lumière (12), les récepteurs, le convertisseur analogique/numérique (21) et l'amplificateur (20) sont couplés thermiquement au refroidisseur thermoélectrique (22) par l'intermédiaire d'un passage (11) thermique réalisé sous forme de trou de contact (11).

19. Utilisation du module selon une des revendications précédentes, pour des opérations de mesure à l'extérieur du module avec des capteurs à fibres de verre raccordés, pour mesurer l'humidité, la teneur en hydrogène, le pH, d'hydrocarbures et en particulier la température.

9

EP 0 935 742 B1

Fig. 1

Fig. 2

Fig. 3

Fig. 4

Fig. 5a

Fig. 5b